# EUROPÄISCHE PATENTSCHRIFT

(11) **EP 2 557 327 B1**
(45) Veröffentlichungstag und Bekanntmachung des Hinweises auf die Patenterteilung: **14.10.2015**
(21) Anmeldenummer: 11006492.0
(22) Anmeldetag: 08.08.2011
(51) Int. Cl.: F16D 3/60

(54) **Kupplungseinheit zur verbindung eines Antriebs mit einem Abtrieb**
Coupling unit for connecting a drive with an output
Unité d'embrayage pour la liaison d'un entraînement d'entrée avec un entraînement de sortie

(43) Veröffentlichungstag der Anmeldung: 13.02.2013
(73) Patentinhaber: Centa-Antriebe Kirschey GmbH, 42781 Haan (DE)
(72) Erfinder: Exner, Jochen, D-53773 Hennef (DE); Exner, Daniel, D-53773 Hennef (DE)
(74) Vertreter: Roche, von Westernhagen & Ehresmann

(56) Entgegenhaltungen:
- EP-A2- 0 297 359
- WO-A1-85/04457
- DE-A1- 4 017 938
- ES-A1- 2 191 520
- US-A- 5 851 150

## Beschreibung

Die Erfindung betrifft eine Kupplungseinheit zur Verbindung eines Antriebs mit einem Abtrieb
- mit einer antriebsseitigen Anschlussvorrichtung, wie Flansch, die eine antriebsseitige Rotationsachse aufweist und mit einer Vielzahl von antriebsseitigen Befestigungsmitteln versehen ist, welche alle in einer gemeinsamen Radialebene der Rotationsachse und auf einem gemeinsamen Radius um die Rotationsachse der antriebsseitigen Anschlussvorrichtung angeordnet sind,
- mit einer abtriebsseitigen Anschlussvorrichtung, wie Flansch, welche eine abtriebsseitige Rotationsachse aufweist und mit einer Vielzahl von abtriebsseitigen Befestigungsmitteln versehen ist, welche alle in einer gemeinsamen Radialebene der Rotationsachse und auf einem gemeinsamen Radius um die Rotationsachse der abtriebseitigen Anschlussvorrichtung angeordnet sind
- und mit Verbindungselementen, wie Lenker oder Koppelstange, die einerseits an einem antriebsseitigen Befestigungsmittel (113) und andererseits an einem abtriebsseitigen Befestigungsmittel (213) mittels einer sphärischen Gelenkverbindung angeordnet sind.

Eine gattungsgemäße Kupplungseinheit ist beispielsweise in DE 42 05 666 C2 offenbart. Hierbei handelt es sich um eine sogenannte Gelenkhebelkupplung, bei welcher gelenkig zwischen An- und Abtrieb befestigte Hebel einen Winkel- und Axialversatz der verbundenen Aggregate bis zu einem gewissen Grad ausgleichen können. Werden zwei Kupplungseinheiten der in DE 42 05 666 C2 beschriebenen Art im Kraftfluss hintereinander geschaltet, erlaubt eine solcherhand geschaffene Wellenkupplung auch den Ausgleich eines Radialversatzes von Aggregaten.

Die Lenker sind in Gummibuchsen gelagert, die in geringem Maß eine Dämpfungsfunktion haben. Darüber hinaus sind die Gummielemente notwendig, um eine winklige Stellung von An- und Abtrieb zueinander zu ermöglichen. Sie gleichen die Abstandsänderung zwischen den Befestigungselementen eines Lenkers während einer Umdrehung der Kupplungseinheit aus.

Dem möglichen Winkelversatz und Axialversatz zweier Aggregate sind durch den notwendigen Einsatz von abstandsausgleichenden Gummielementen physikalische Grenzen gesetzt. Darüber hinaus begrenzt das Elastomermaterial auch das maximal zu übertragende Drehmoment. Um die Drehmomentbelastung der Kupplung zu steigern, muss die Kupplung selbst in ihrer Bauform vergrößert und die Anzahl der genutzten Lenker erhöht werden, was im Gegenzug die Winkelausgleichsfähigkeit der Kupplung vermindert.

Um bei verminderter Winkelausgleichsfähigkeit weiterhin einen definierten Radialversatz zweiter Aggregate überbrücken zu können, muss eine entsprechende Wellenkupplung in ihrer Bauform verlängert werden.

Insoweit besteht ein erheblicher Bedarf für eine Kupplung, die auch größeren Winkel- und Axialversatz auszugleichen im Stande ist und gleichzeitig sehr hohe Drehmomente vom Antrieb auf den Abtrieb übertragen kann. Es ist Aufgabe der Erfindung, eine solche Kupplung zu schaffen.

Gelöst wird die Aufgabe von einer Kupplung, die eine erfindungsgemäße Kupplungseinheit mit den Merkmalen des Anspruchs 1 beinhaltet und sich somit dadurch kennzeichnet, dass der Radius, auf welchem die antriebsseitigen Befestigungsmittel um die antriebsseitige Rotationsachse angeordnet sind und der Radius, auf welchem die abtriebsseitigen Befestigungsmittel um die abtriebsseitige Rotationsachse angeordnet sind betragsmäßig identisch sind, dass das antriebsseitige Befestigungsmittel und das mit diesem mittels eines Verbindungselementes gekoppelte abtriebsseitige Befestigungsmittel hinsichtlich der antriebsseitigen Rotationsachse um 80 Grad bis 100 Grad, insbesondere 85 Grad bis 95 Grad, insbesondere um im Wesentlichen 90 Grad umfangsbeabstandet zueinander angeordnet sind.

Aus der DE 40 17 938 A1, der WO 85/04457 A1 und der ES 2 191 520 A1 sind jeweils Kupplungseinheiten bekannt, bei denen ein Umfangswinkelversatz zwischen antriebsseitigen Befestigungsmittel und abtriebsseitigen Befestigungsmittel von 77°, 105°, bzw. 60° bekannt ist. Ein Umfangswinkelversatz zwischen 80° und 100° geht aus keiner dieser Druckschriften hervor.

Besonders bevorzugt ist eine Ausführungsform mit den Merkmalen des Anspruchs 2, wonach drei Verbindungselemente vorgesehen sind, die jeweils ein antriebsseitiges Befestigungsmittel und ein abtriebsseitigen Befestigungsmittel miteinander verbinden und in einem gemeinsamen, sich über einen Axialabschnitt der antriebsseitigen Rotationsachse erstreckenden Radialraum zwischen der antriebsseitigen Anschlussvorrichtung und der abtriebsseitigen Anschlussvorrichtung angeordnet sind und ein Verbindungsmittelterzett bilden.

Der wesentliche Vorteil der erfindungsgemäßen Kupplungseinheit ist, dass sie ein Gleichlaufgelenk ausbildet, wobei sich die Verbindungselemente, auch Lenker genannt, ohne Zwischenschaltung von längenausgleichenden Elastomeren an Antrieb und Abtrieb festlegen lassen. Dies ist der Tatsache geschuldet, dass die Befestigungselemente von An- und Abtrieb bei einer Umdrehung der Kupplungseinheit ihren Abstand zueinander nicht verändern. Infolgedessen können hochfeste Werkstoffe wie Stähle oder Gewebewerkstoffe genutzt werden, die aufgrund ihrer gegenüber Elastomeren wesentlich höheren Tragfähigkeit im Gesamtsystem der Kupplungseinheit dazu führen, dass vielfach höhere Drehmomente gegenüber dem eingangs zitierten Stand der Technik übertragen werden können.

Es ist eine Ausführungsform denkbar, bei der die Kupplungseinheit weitere Verbindungsmittelterzette zwischen der antriebsseitigen Anschlussvorrichtung und der abtriebsseitigen Anschlussvorrichtung aufweist, die vorteilhaft jeweils drei Verbindungselemente umfassen, und jeweils in einem eigenen Radialraum zwischen der antriebsseitigen Anschlussvorrichtung und der abtriebsseitigen Anschlussvorrichtung angeordnet sind.

Mittels weiterer Verbindungsmittelterzette als Kraft übertragende Glieder zwischen Antrieb und Abtrieb lässt sich die Leistungsfähigkeit der Kupplung erhöhen.

Es ist von wesentlichem Vorteil, wenn die durch jeweils ein Verbindungsterzett angebundenen Befestigungsmittel Befestigungsmittelgruppen bilden, die auf demselben Radius, jedoch umfangsversetzt zueinander angeordnet sind und/oder die Befestigungsmittel auf unterschiedlichen Radien angeordnet sind.

Wenn man die Befestigungselemente von An- und Abtrieb in Umfangsabstand von 90 Grad zueinander anordnet, erhält man eine Kupplungseinheit mit drei Verbindungsmitteln als einfachste und kinematisch optimale Ausführungsform der Erfindung. Um die Leistungsdichte der Kupplungseinheit zu erhöhen, können an- und abtriebsseitig weitere Paare von Befestigungselementen vorgesehen sein, solange auch diese einen Umfangsabstand von 90 Grad zueinander aufweisen. Es ist vorstellbar, diese weiteren Paare von Befestigungselementen auf einen anderen Radius oder umfangsversetzt zu den ersten Paaren von Befestigungsmitteln anzuordnen.

Es ist denkbar, dass die sphärische Gelenkverbindung unter Nutzung von Stahl, Kunststoff, Elastomeren und/oder Gewebewerkstoffen gebildet ist.

Diese Werkstoffe erlauben eine hohe Tragfähigkeit als Gelenkverbindung zwischen den Befestigungsmitteln und Verbindungselementen. In speziellen Einsatzgebieten hat jedoch der Verzicht auf Elastomerverbindungen zwischen den Verbindungselementen und dem An- sowie dem Abtrieb den Vorteil, dass die Gelenkverbindung rückstellkraftfrei ausgebildet werden kann.

Je nach Ausgestaltung der Verbindungselemente ist es vorteilhaft, wenn die Verbindungselemente im Betrieb der Kupplungseinheit gegen ein Verdrehen um Ihre Längsachse gesichert ist. Eine solche Verdrehung um die Längsachse der Verbindungselemente kann zum Beispiel durch Fliehkräfte hervorgerufen werden.

Eine Kupplung mit erfindungsgemäßen Kupplungseinheiten in doppelkardanischer Anordnung ist von Ihrem Aufbau her auch in der Lage, erheblichen Axialversatz der Aggregate ausgleichen zu können. Diese Fähigkeit ist im Wesentlichen durch die sphärische Gelenkigkeit der Verbindungselemente, deren Ebenenabstandes und des Abstandes der Befestigungsmittel zueinander bestimmt.

Bei dem Einsatz zweier Kupplungseinheiten, die mittels einer Welle zu einer doppelkardanisch aufgebauten Wellenkupplung zusammengefügt sind, ist es sinnvoll, die axiale Freigängigkeit zu erschweren, um axiale Spielbewegungen der zwischen den Kupplungseinheiten befindlichen Welle zu kontrollieren.

Sowohl die axiale Spielbewegung wie auch die Verdrehung der Verbindungselemente um ihre Längsachse lässt sich beispielsweise durch den geschickten Einsatz von Elastomeren eindämmen und/oder verhindern, ohne dass negative Auswirkungen auf die Laufruhe, die Winkel- und Axialausgleichsfähigkeit zu befürchten sind.

Theoretisch ist es denkbar, einen Winkelversatz bis nahezu 90 Grad auszugleichen und Drehmomente von weit über 500.000 Nm zu übertragen. In einem realistischen Szenario kann ohne Weiteres ein Winkelversatz von 10 Grad bis zu 45 Grad ausgeglichen werden, was mit den bisher gängigen Wellenkupplungen kaum erreichbar ist.

Im Folgenden wird die Erfindung anhand der Beschreibung eines Ausführungsbeispiels näher erläutert. Aus dieser Beschreibung ergeben sich darüber hinaus weiter Vorteile. Es zeigen:
- Fig. 1: eine antriebsseitige Anschlussvorrichtung einer erfindungsgemäßen Kupplungseinheit mit einem Verbindungselement in einer ersten Ausführungsform,
- Fig. 2: die Anschlussvorrichtung gemäß Fig. 1 mit drei Verbindungselementen,
- Fig. 3: die Anschlussvorrichtung gemäß Fig. 1 mit sechs Verbindungselementen,
- Fig. 4: eine isometrische Darstellung einer Wellenkupplung unter Verwendung zweier erfindungsgemäßer Kupplungseinheiten gemäß Fig. 1,
- Fig. 5: die Wellenkupplung gemäß Fig. 4 in Seitenansicht,
- Fig. 6: eine antriebsseitige Anschlussvorrichtung einer erfindungsgemäßen Kupplungseinheit mit einem Verbindungselement in einer zweiten Ausführungsform,
- Fig. 7: die Anschlussvorrichtung gemäß Fig. 6 mit drei Verbindungselementen in perspektivischer Ansicht,
- Fig. 8: die Anschlussvorrichtung gemäß Fig. 7 in Aufsicht,
- Fig. 9: eine isomentrische Darstellung einer Kupplungseinheit in einer zweiten Ausführungsform unter Verwendung einer Anschlussvorrichtung gemäß Fig. 6 bis 8 in isometrischer Ansicht,
- Fig. 10: die Kupplungseinheit gemäß Fig. 9 in Seitenansicht.

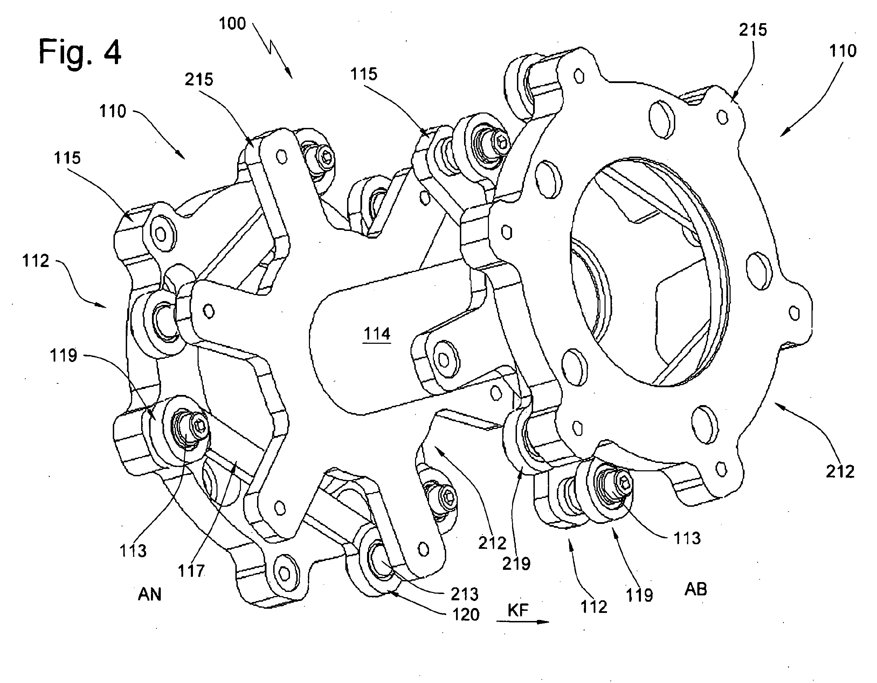

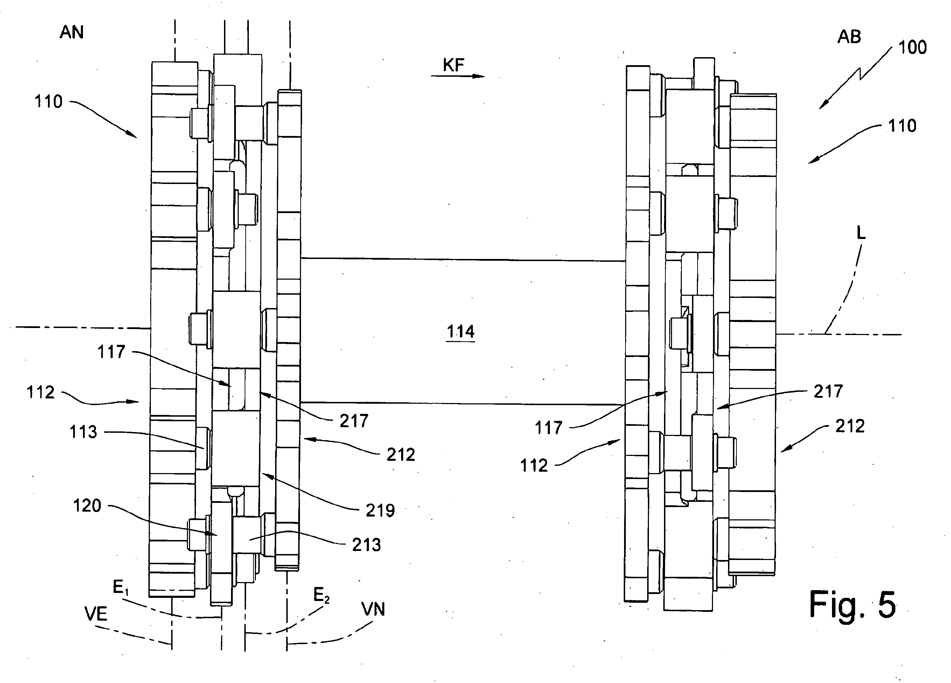

In den Figuren 4 und 5 ist eine Wellenkupplung insgesamt mit der Bezugsziffer 100 versehen.

Die Wellenkupplung 100 umfasst zwei insgesamt mit der Bezugsziffer 110 bezeichnete Kupplungseinheiten. Die Kupplungseinheiten 110 sind in Kraftflussrichtung KF axial hintereinander angeordnet und durch eine Welle 114 miteinander gekoppelt. Der Kraftfluss verläuft vom nicht dargestellten Antrieb AN zum ebenfalls nicht dargestellten Abtrieb AB. Ein nachfolgend als antriebsseitig beschriebenes Bauelement ist in der Regel relativ zu einem weiteren Bauelement antriebsseitig angeordnet, ein nachfolgend als abtriebsseitig bezeichnetes Bauelement ist in der Regel relativ zu einem anderen Bauelement abtriebsseitig angeordnet.

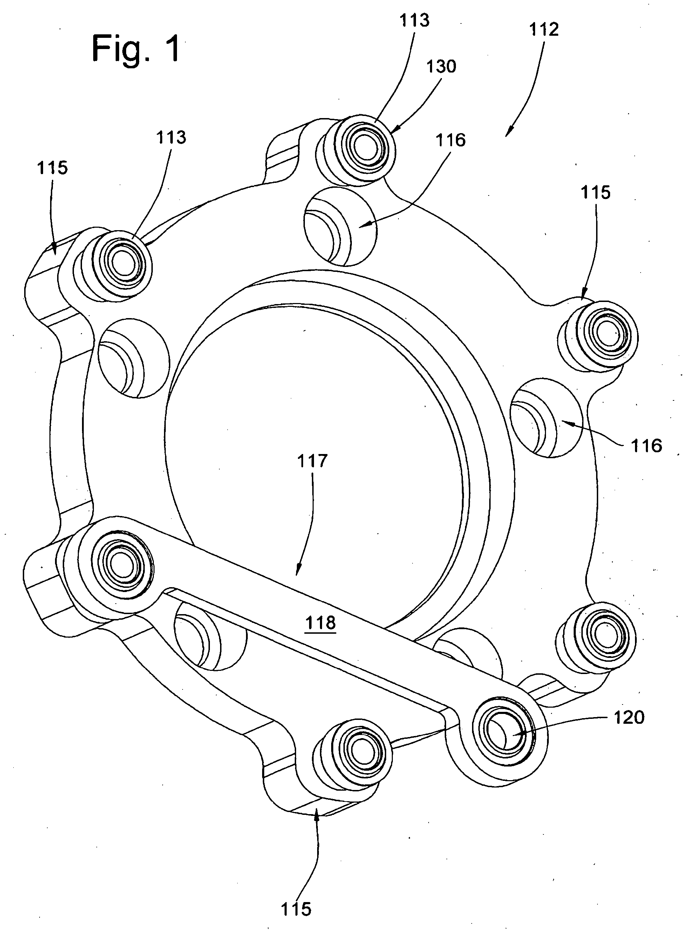

In Figur 1 ist eine antriebsseitige Anschlussvorrichtung 112 dargestellt, die auch als antriebsseitiger Flansch 112 oder antriebsseitiger Flanschring 112 bezeichnet wird. Der Flansch 112 ist ringförmig gestaltet und ist mit außenumfänglich angeordneten sternstrahlähnlichen Fortsätzen 115 versehen. Diese Fortsätze 115 kö nnen gleichmäßig über den Umfang verteilt sein und tragen die antriebsseitigen Befestigungsmittel 113. Der Ring selbst ist mit sacklochartigen Bohrungen 116 versehen, durch die nicht dargestellte Schraubbolzen zur Befestigung an einem antriebsseitigen Aggregat hindurchgeführt werden.

Dargestellt ist in Figur 1 weiterhin ein Verbindungsmittel, welches mit der Bezugsziffer 117 versehen ist und im Folgenden auch als Lenker 117 oder Koppelstange 117 bezeichnet wird. Ein solcher Lenker 117 weist ein in etwa stabförmiges Zwischenstück 118 auf an dessen einem Ende eine antriebsseitige Aufnahmeöse 119 und an dessen anderem Ende eine abtriebsseitige Aufnahmeöse 120 angeordnet ist. In der dargestellten antriebsseitigen Aufnahmeöse 119 sitzt das antriebsseitige Befestigungsmittel 113 ein, die abtriebsseitige Aufnahmeöse 120 ist zur Aufnahme des abtriebsseitigen Befestigungsmittels 213 vorgesehen.

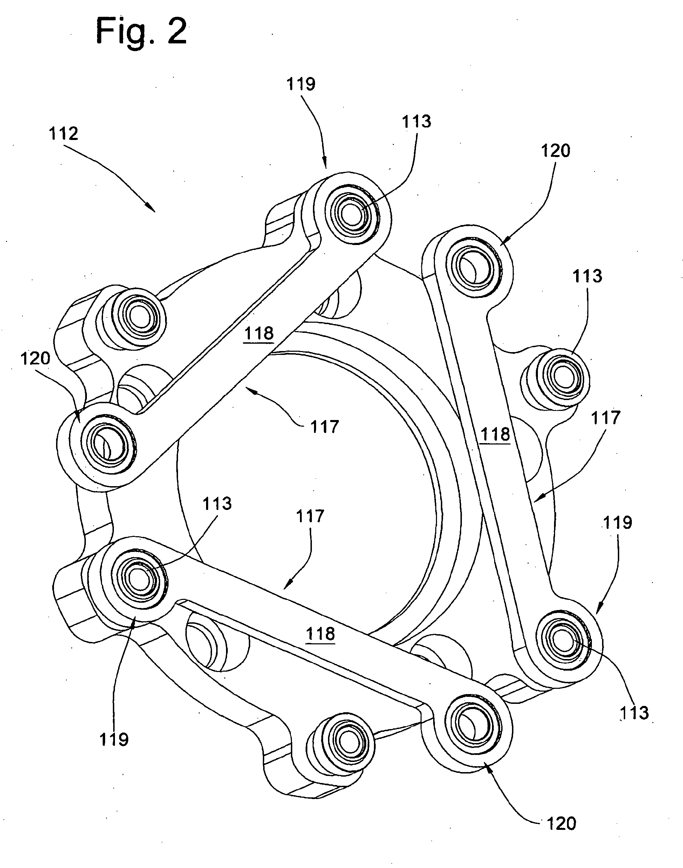

In Figur 2 ist die bereits vorbeschriebene Anschlussvorrichtung 112 noch einmal dargestellt. Die Darstellung ist um 2 weitere Lenker 117 ergänzt, deren antriebsseitige Aufnahmeösen 119 an antriebsseitigen Befestigungsmitteln 113 angeordnet sind. Auch hier sind die abtriebsseitigen Aufnahmeösen 120 zur Aufnahme abtriebsseitiger Befestigungsmittel 213 vorgesehen.

Wie der Figur 2 zu entnehmen ist, trägt im vorliegenden Ausführungsbeispiel jedes zweite antriebsseitige Befestigungselement 113 einen antriebsseitigen Lenker 117 über dessen antriebsseitige Aufnahmeöse 119. Diese Anordnung ist jedoch für die beschriebene Ausführungsform spezifisch.

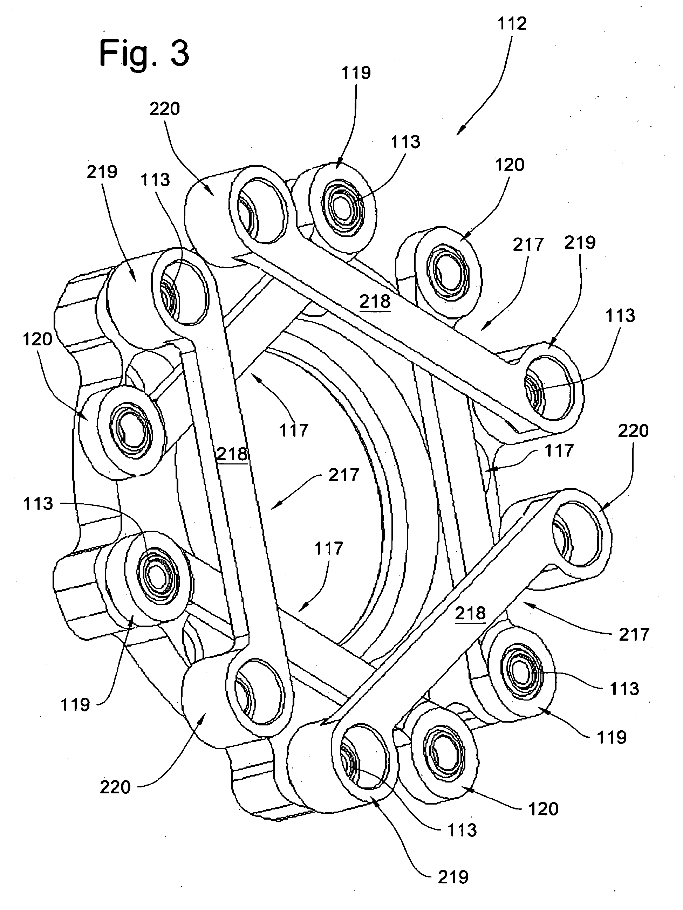

Auch Figur 3 zeigt den aus den Figuren 1 und 2 bereits bekannten antriebsseitigen Befestigungsflansch 112. Neben den in Figur 2 dargestellten drei antriebsseitigen Lenkern 117 sind nunmehr drei zusätzliche, abtriebsseitige Lenker 217 dargestellt.

Die abtriebsseitigen Lenker 217, auch abtriebsseitige Verbindungsmittel 217 oder abtriebsseitige Koppelstangen 217 genannt, weisen ebenfalls ein Zwischenstück auf, welches mit der Bezugsziffer 218 bezeichnet ist. Jedes abtriebsseitige Zwischenstück 218 weist einenends eine antriebsseitige Aufnahmeöse 219 auf, welche antriebsseitige Befestigungsmittel 113 aufnimmt. Anderenends trägt das abtriebsseitige Zwischenstück 218 abtriebsseitige Aufnahmeösen 220 in Fig. 3 für nicht näher bezeichnete, abtriebsseitige Befestigungsmittel.

An der Darstellung der abtriebsseitigen Lenker 217 fällt auf, dass sowohl die antriebsseitige Aufnahmeöse 219 als auch die abtriebsseitige Aufnahmeöse 220 aus der nicht dargestellten Materialebene des Zwischenstücks 218 herausspringt, wobei beide Ösen 219 und 220 in dieselbe Richtung aus der Materialebene des Zwischenstücks 218 ausgestellt sind. Demgegenüber sind die Ösen 119 und 120 der antriebsseitigen Lenker in der Materialebene des Zwischenstückes 117 angeordnet. Diese Konstruktion ermöglicht es, dass die antriebsseitigen Lenker 117 in einer ersten Radialebene der Kupplungseinheit 110 angeordnet sind und die abtriebsseitigen Lenker 217 - und hier insbesondere die Zwischenstücke 218 - in einer zweiten Radialebene der Kupplungseinheit 110 liegen. In Folge dessen kollidieren die antriebsseitigen Lenker 117 bei einer Rotation der Kupplungseinheit 110 nicht mit den abtriebsseitigen Lenkern 217.

Aus Darstellungsgründen ist in den Figuren 1 bis 3 die abtriebsseitige Anschlussvorrichtung 212, die wiederum als abtriebsseitiger Flansch 212 oder abtriebsseitiger Flanschring 212 bezeichnet werden kann, nicht dargestellt. Man kann sich jedoch anhand des aus den Figuren 1 bis 3 hervorgehenden Aufbaus leicht vorstellen, wie diese abtriebsseitige Anschlussvorrichtung nunmehr in einer weiteren, hinsichtlich der Darstellung der Figur 3 oberhalb der Lenker 217 angeordneten Ebene liegt. Diese in Figur 3 nicht dargestellte, abtriebsseitige Anschlussvorrichtung ist beim konkreten Ausführungsbeispiel komplementär zur antriebsseitigen Anschlussvorrichtung 112 ausgebildet und weist insofern ebenfalls sternstrahlartige Fortsätze 215 auf, welche abtriebsseitige Befestigungsmittel 213 tragen.

In Figur 4 ist eine insgesamt mit 100 bezeichnete Wellenkupplung in isometrischer Ansicht dargestellt. Diese weist zwei in Kraftflussrichtung KF hintereinander angeordnete und mittels einer Welle 114 gekoppelte Kupplungseinheiten 110 auf. Der Kraftfluss erfolgt von einem nicht dargestellten, in Figur 4 jedoch linksseitig angeordneten Antrieb AN zu einem ebenfalls nicht dargestellten, in Figur 4 jedoch rechtsseitig angeordneten Abtrieb AB. Wellenkupplungen dieser Art werden bevorzugt zum Ausgleich von einem Radialversatz zwischen einem Antrieb AN und einem Abtrieb AB eingesetzt.

In Figur 4 sind der Übersicht halber nicht alle Lenker dargestellt. Auch ist die jeweils antriebsseitige Anschlussvorrichtung 112 nicht baugleich mit der abtriebsseitigen Anschlussvorrichtung 212 ausgebildet. Auf die vorbeschriebene Funktionalität hat dies jedoch keinen Einfluss.

In Figur 5 ist die Wellenkupplung 100 in Seitenansicht unter Darstellung aller Einzelteile gezeigt.

Die Wellenkupplung 100 weist eine Längsmittelachse L auf, die in dieser Darstellung mit der Rotationsachse der Wellenkupplung 100 identisch ist. Darüber hinaus fallen die Längsmittelachsen der Kupplungseinheiten 110 sowie die Rotationsachsen der antriebsseitigen und abtriebsseitigen Anschlussvorrichtungen 112 und 212 zusammen. Diese Situation stellt sich jedoch nur bei einer idealen Ausrichtung von nicht dargestelltem Antrieb AN mit dem nicht dargestellten Abtrieb AB entsprechend Figur 5 dar. Die Radialebenen werden von Radien aufgespannt, die der Rotationsachse der antriebsseitigen Anschlussvorrichtung 112 entspringen.

Aus Figur 5 kann man insbesondere die in Kraftflussrichtung KF einander nachgeordneten einzelnen Radialebenen der Kupplungseinheiten 110 entnehmen. So liegt die jeweils antriebsseitige Anschlussvorrichtung 112 in einer vorgeordneten Ebene VE. Daran schließt sich die erste Ebene E1 an, in welcher die antriebsseitigen Lenker 117 angeordnet sind. In der zweiten Ebene E2 sind die abtriebsseitigen Lenker 217 angeordnet, worauf die nachgeordnete Ebene VN mit der abtriebsseitigen Anschlussvorrichtung folgt. Die Ebenen E1 und E2 sind Teil eines jeweiligen Radialraums, innerhalb dessen drei ein Verbindungsmittelterzett bildende Lenker 117 bzw. 217 angeordnet sind.

Die Befestigungsmittel 113 und 213 sind vorzugsweise sphärisch ausgebildet und bilden zusammen mit den Ösen 119, 120, 219 und 220 ein Kugelgelenk aus, so dass die jeweils antriebsseitige Anschlussvorrichtung 112 winklig zur abtriebsseitigen Anschlussvorrichtung 212 angeordnet werden kann. Auch erlaubt die kugelgelenkartige Anbindung einen Axialversatz von antriebsseitiger Anschlussvorrichtung 112 und abtriebsseitiger Anschlussvorrichtung 212. Hinsichtlich der Darstellung der Figur 5 lässt sich der Abstand zwischen den Anschlussvorrichtung 112 und 212 in Folge dessen vergrößern. Auf diese Weise wird winkliger Versatz und axialer Versatz zwischen Antrieb AN und Abtrieb AB ausgeglichen.

Das Zusammenschalten zweier erfindungsgemäße Kupplungseinheiten 110 zu einer Wellenkupplung 100, wie sie in Figur 5 dargestellt ist, erlaubt es, einen radialen Versatz zweier Aggregate auszugleichen, indem die in Kraftflussrichtung KF erste Kupplungseinheit 110 einen bestimmten Winkel größer 0 Grad zwischen den Anschlussvorrichtungen 112 und 212 aufweist und die abtriebsseitige Kupplungseinheit 110 zwischen ihren Anschlussvorrichtungen 112 und 212 einen entsprechenden Gegenwinkel aufweist. Die gewählte Anordnung der Befestigungsmittel 113 und 213 in Relation zur Drehachse der jeweiligen Anschlussvorrichtung 112 und 212 in Verbindung mit dem Umfangsabstand von 90 Grad zwischen zwei Befestigungsmitteln 113 und 213 eines Lenkers 117 oder 217 erlaubt es, die Lenker ohne Gummilagerung an den Befestigungsmitteln 113 und 213 anzubinden.

Der Umfangsabstand von 90 Grad zwischen zwei Befestigungsmitteln 113 und 213 entspricht einer kinematisch ideal gestalteten Kupplungseinheit 110. In Abhängigkeit von der Baugröße der Kupplungseinheit 110 und den Toleranzen der Bauteile, insbesondere dem summierten Lagerspiel, kann der Umfangsabstand vom Ideal abweichen, solange die dann auftretende Abstandsänderung zwischen den Befestigungsmitteln 113 und 213 durch die Toleranzen oder Materialelastizitäten aufgefangen wird.

Aufgrund dieser Anordnung lässt sich ein Winkelversatz zwischen Antrieb AN und Abtrieb AB ausgleichen, ohne dass der Abstand zwischen den Befestigungsmitteln 113 und 213 eines Lenkers 117 oder 217 einer Änderung unterworfen ist. In Folge dessen ist kein flexibles Element notwendig, welches diese Abstandsänderung kompensiert. Insofern ist die Winkelausgleichsmöglichkeit eines erfindungsgemäßen Kupplungselementes lediglich davon abhängig, dass Lenker 117 und 217 sowie Befestigungsmittel 113 und 213 eine ausreichende Winkelfreigängigkeit gewährleisten, was insbesondere durch die Abstände der Ebenen VE, E1, E2 und VN bestimmt ist.

In der Theorie bedeutet dies, dass Winkel von nahezu 90 überbrückbar wären. Unter Realbedingungen sind ohne Weiteres Winkel von 10 Grad bis zu 45 Grad ausgleichbar, was im Gegensatz zur bisherigen Winkelausgleichsfähigkeit gattungsgemäßer Kupplungen von maximal zwei Grad eine erhebliche Verbesserung darstellt. Auch eine größere Winkelausgleichsfähigkeit der erfindungsgemäßen Kupplungseinheit 110 ist denkbar, auch wenn man in der Realität davon ausgehen kann, dass sie lediglich in wenigen Spezialfällen notwendig sein wird.

Der Verzicht auf elastische Elemente zur Anbindung der Anschlussvorrichtungen 113 und 213 an den Lenkern 117 und 217 ermöglicht es darüber hinaus, sehr viel höhere Drehmomente bei uneingeschränkter Winkelausgleichsfähigkeit vom Antrieb AN auf den Abtrieb AB übertragen zu können. So können die vorerwähnten Kugelgelenke beispielsweise aus stählernen Kugeln und ebenfalls stählernen Ösen 119, 219, 120 und 220 gebildet sein. Alternativ sind auch hochleistungsfähige Gewebeverbundstoffe sowie Gelenklagereinheiten aus Hochleistungskunststoffen zur Bildung der sphärischen Gelenke vorstellbar.

Ein Verdrehen der Lenker 117 und 217 um ihre Längsachse oder ein Axialspiel der Welle 114 einer Wellenkupplung 100 im Betrieb lässt sich konstruktiv durch geeignete, die eigentliche Winkel- und Axialausgleichsfunktion nicht beeinträchtigende Dämpfungselemente stark minimieren bzw. ausschließen. Um ein Verkippen der Lenker 117, 217 um ihre Längsachse zu vermeiden, können geeignete Elastomere im Bereich der Gelenkverbindungen vorgesehen sein. Diese können auch zur Vermeidung unkontrollierter Axialbewegungen der Welle 114 dienen. Alternativ oder zusätzlich können Elastomerpuffer an den Anschlussvorrichtungen 112, 212 unkontrollierte Axialbewegungen der Welle 114 verhindern.

Zusammenfassend wurde eine Kupplungseinheit 110 dargestellt, die in hervorragender Weise Winkelversatz und Axialversatz ausgleichen kann ohne Kompromisse bei der Übertragung von Drehmomenten eingehen zu müssen. Sie ist sowohl hinsichtlich der übertragbaren Drehmomente als auch hinsichtlich insbesondere des Winkelversatzausgleichs sehr viel leistungsfähiger als Kupplungen aus dem gattungsgemäßen Stand der Technik. Durch den Einsatz zusätzlicher Lenker 117 und 217 sowie weiterer Befestigungsmittel 113 und 213 unter Berücksichtigung der erfindungsgemäßen Merkmale lässt sich die Drehmomentübertragungskapazität weiter erhöhen, ohne Kompromisse hinsichtlich der Winkelausgleichsfähigkeit der Kupplung 100 eingehen zu müssen.

Die Figuren 1 - 5 zeigen Kupplungseinheiten 110, die vom Aufbau der Anschlussvorrichtungen 112 und 212 zur Anordnung von drei Lenkern 117 und drei weiteren Lenkern 217 in Form von zwei Verbindungsmittelterzetten in einem jeweils eigenen Radialraum ausgebildet sind. Hierzu sind die sternstrahlenähnlichen Fortsätze 115 des ersten und zweiten Verbindungsmittelterzetts beziehungsweise der antriebsseitigen Lenker 117 und der abtriebsseitigen Lenker 217 mit den jeweiligen Befestigungsmitteln 113 auf dem selben Radius der jeweiligen Anschlussvorrichtung 112 bzw. 212 jedoch umfangsversetzt zueinander angeordnet.

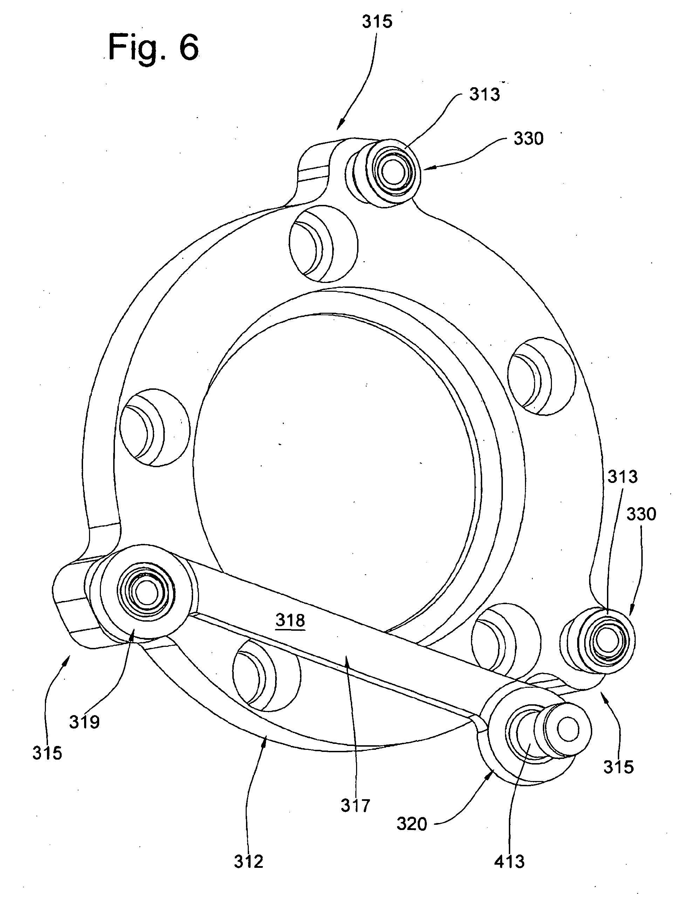

Die Grundform der erfindungsgemäßen Kupplungseinheit wird nunmehr in der nachfolgenden Beschreibung zu den Figuren 6 bis 10 dargestellt. Um eine Unterscheidbarkeit der zwei Ausführungsformen zu gewährleisten, werden auch für gleichartige Bauteile unterschiedliche Bezugsziffern verwendet, obwohl eine identische oder analoge Funktion gegeben ist.

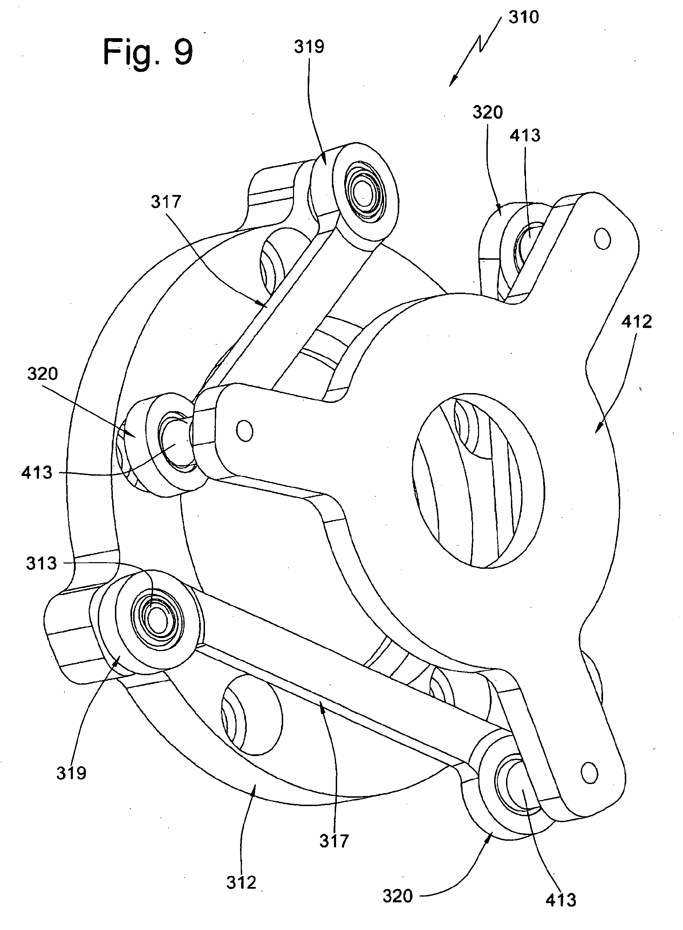

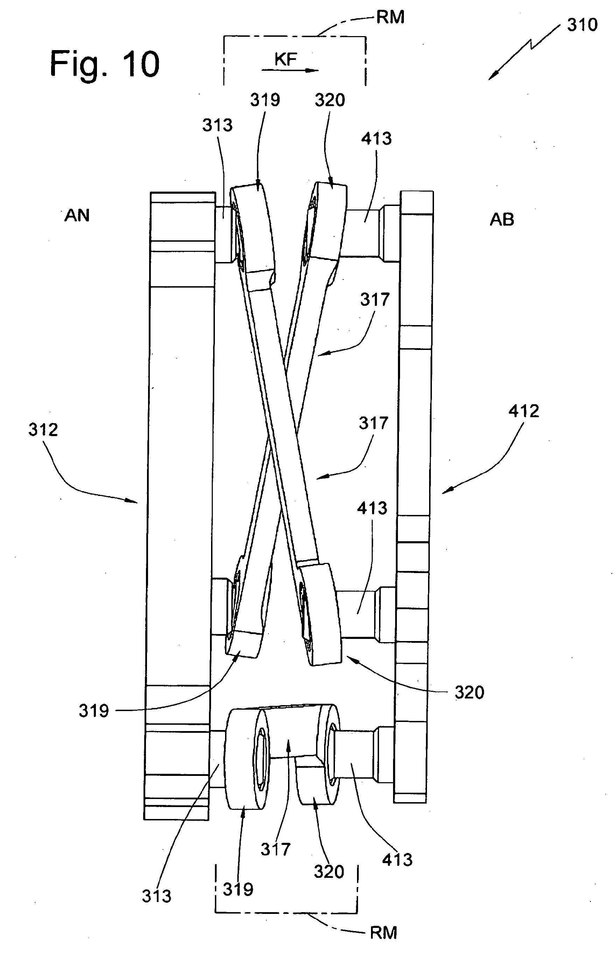

Die Kupplungseinheit der Figuren 6 bis 10 ist in Ihrer Gesamtheit in den Figuren 9 und 10 dargestellt und insgesamt mit der Bezugsziffer 310 bezeichnet.

In Fig. 6 ist zunächst die antriebsseitige Anschlussvorrichtung 312 in Form eines Ringflansches 312 inklusive eines Verbindungsmittels 317 (auch Lenker oder Koppelstange genannt) dargestellt. Die antriebsseitige Anschlussvorrichtung 312 verfügt über drei gleichmäßig über den Umfang verteilte sternstrahlartige Fortsätze 315, die der Anordnung von antriebsseitigen Befestigungsmitteln 313 dienen. Diese antriebsseitigen Befestigungsmittel 313 sind, genau wie im vorher beschriebenen Ausführungsbeispiel, als an einem Schaft sitzende Gelenkkugeln ausgebildet, die von einem buchsenartigen Ring 330 umschlossen sind. Dieser buchsenartige Ring 330 eines jeden antriebsseitigen Befestigungsmittels 313 wird jeweils in eine antriebsseitige Aufnahmeöse 319 eines jeden Lenkers 317 eingepresst. In gleicher Weise wird mit dem in Fig. 6 dargestellten, abtriebsseitigen Befestigungsmittel 413 verfahren, welches in der abtriebsseitigen Aufnahmeöse 320 des Lenkers 317 einsitzt. Die antriebsseitige Aufnahmeöse 319 sowie die abtriebsseitige Aufnahmeöse 320 sind durch das Zwischenstück 318 des Lenkers 317 verbunden.

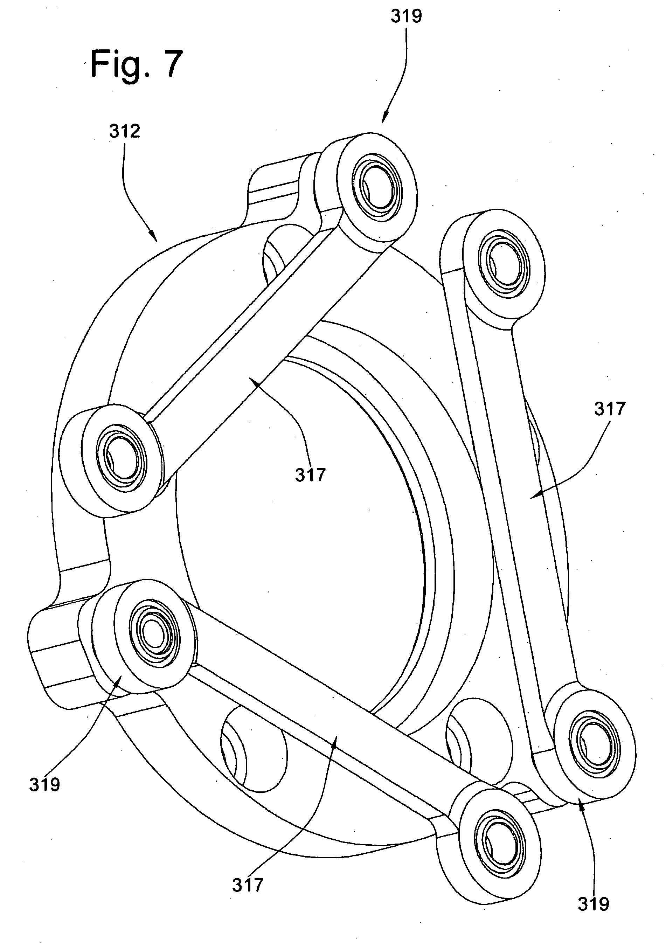

Fig. 7 zeigt eine Darstellung entsprechend Fig. 6 und somit eine perspektivische Ansicht auf die antriebsseitige Anschlussvorrichtung 312, die hier jedoch an ihren drei Befestigungsmitteln 313 jeweils einen Lenker 317 über dessen antriebsseitige Aufnahmeöse 319 trägt.

Auch bei dieser Grundform der Kupplungseinheit 310 sind die antriebsseitigen Befestigungsmittel 313 und die abtriebsseitigen Befestigungsmittel 413 bezüglich der nicht näher dargestellten Drehachse der antriebsseitigen Anschlussvorrichtung 312 um etwa 90 Grad zueinander beabstandet. Von diesem Idealwinkel mag es durch Materialtoleranzen, Passungsspiel und Materialelastizitäten Abweichungen geben, ohne dass die Funktion der Kupplungseinheit 310 wesentlich beeinflusst wird. Genau wie beim vorherigen Ausführungsbeispiel geht die Erfindung davon aus, dass der tatsächliche Umfangsabstand der antriebsseitigen Befestigungsmittel 313 sowie der abtriebsseitigen Befestigungsmittel 413 zwischen 80 Grad und 100 Grad variieren kann.

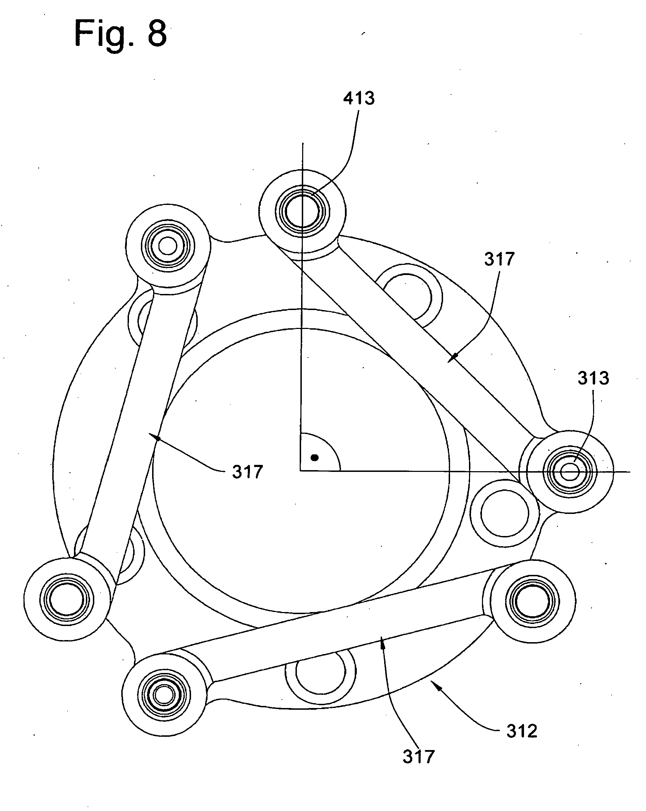

In Fig. 8 ist die abtriebsseitige Anschlussvorrichtung 312 gemäß Fig. 7 noch einmal in in Axialrichtung betrachteter Ansicht dargestellt. Dieser lässt sich der Umfangswinkel von 90 Grad zwischen antriebsseitigem Befestigungselement 313 und abtriebsseitigem Befestigungselement 413 eines jeden Lenkers 317 sehr gut entnehmen. Die drei dargestellten Lenker 317 bilden ein Verbindungsmittelterzett im Sinne einer Verbindungsmittelgrundanordnung.

Die Kupplungseinheit 310 ist, wie schon vorn ausgeführt, in einer perspektivischen Gesamtdarstellung in Fig. 9 gezeigt. Gegenüber der Fig. 7 wurde ergänzend die abtriebsseitige Anschlussvorrichtung 412 mit ihren abtriebseitigen Befestigungsmitteln 413 dargestellt, welche in die abtriebsseitigen Befestigungsösen 320 der Lenker 317 eingreifen.

In Fig. 10 ist die Kupplungseinheit 310 in einer Seitenansicht dargestellt. Der Kraftfluss KF verläuft, wie auch schon zum vorherigen Ausführungsbeispiel dargestellt, vom Antrieb AN zum Abtrieb AB.

Auffällig im Vergleich zu Fig. 5 ist, dass die Lenker 317 nicht parallel zu den Anschlussvorrichtungen 312 bzw. 412 ausgerichtet sind, sondern einen Winkel mit den Anschlussvorrichtungen 312 bzw. 412 einschließen. Dies ist eine Folge des Ausgleichs eines Axialversatzes zwischen Antrieb AN und Abtrieb AB. Infolgedessen nehmen die Lenker 317 einen Radialraum RM ein, der sich über einen Axialabschnitt der hier nicht dargestellten Drehachse der antriebsseitigen bzw. abtriebsseitigen Anschlussvorrichtung 312, 412 erstreckt. Einen Winkelversatz zwischen Antrieb AN und Abtrieb AB würde die Kupplungseinheit 310 ausgleichen, wenn die Anschlussvorrichtungen 312 und 412 nicht parallel zueinander, sondern unter einem Winkel zueinander angeordnet wären.

Aus dem Vergleich der beiden Ausführungsformen lässt sich unschwer erkennen, dass die in den Figuren 6 bis 10 dargestellte zweite Ausführungsform die Grundform der erfindungsgemäßen Kupplungseinheit darstellt. Sie umfasst ein einziges, die antriebsseitige Anschlussvorrichtung 312 sowie die abtriebsseitige Anschlussvorrichtung 412 kraftschlüssig miteinander verbindendes Verbindungsmittelterzett.

Wie im ersten Ausführungsbeispiel in den Figuren 1 bis 5 dargestellt, können weitere Verbindungsmittelterzette zwischen einer jeden antriebseitigen Anschlussvorrichtung 312 und einer abtriebsseitigen Anschlussvorrichtung 412 angeordnet sein. Diese nehmen dann einen zweiten Radialraum RM ein und steigern die Leistungsfähigkeit, also die Fähigkeit zur Drehmomentübertragung der Kupplungseinheit 310. Die zu jedem weiteren Verbindungsmittelterzett zugehörigen Befestigungsmittel können entweder radiusgleich jedoch umfangsversetzt zu den Befestigungsmitteln des anderen Verbindungsmittelterzetts an den Anschlussvorrichtungen angeordnet sein. Alternativ ist es denkbar, dass sie auf einem anderen Radius angeordnet sind, was zu unterschiedlichen Lenkerlängen zwischen den Verbindungsmittelterzetten führt.

Theoretisch ist es auch denkbar, statt eines weiteren Verbindungsmittelterzetts, lediglich einen oder zwei weitere Lenker vorzusehen.

### Bezugszeichenliste:

- 100: Wellenkupplung
- 110: Kupplungseinheit
- 114: Welle
- 112: antriebsseitige Anschlussvorrichtung von 110
- 113: antriebsseitiges Befestigungsmittel
- 115: sternstrahlartiger Fortsatz von 112
- 116: Bohrungen von 112
- 117: antriebsseitiger Verbindungsmittel, Lenker oder Koppelstange
- 118: Zwischenstück von 117
- 119: antriebsseitige Aufnahmeöse
- 120: abtriebsseitige Aufnahmeöse

- 212: abtriebsseitige Anschlussvorrichtung von 110
- 213: abtriebsseitiges Befestigungsmittel
- 215: Fortsatz von 212
- 217: abtriebsseitiger Lenker, Verbindungsmittel oder Koppelstange
- 218: Zwischenstück von 217
- 219: antriebsseitige Aufnahmeöse
- 220: abtriebsseitige Aufnahmeöse

- 310: Kupplungseinheit
- 312: antriebsseitige Anschlussvorrichtung
- 313: antriebsseitiges Befestigungsmittel
- 315: sternstrahlartiger Fortsatz
- 317: Verbindungsmittel, Lenker oder Koppelstange
- 318: Zwischenstück
- 319: antriebsseitige Aufnahmeöse
- 320: abtriebsseitige Aufnahmeöse
- 330: buchsenartiger Ring

- 412: abtriebsseitige Anschlussvorrichtung
- 413: abtriebsseitiges Befestigungsmittel

- KF: Kraftflussrichtung
- AN: Antrieb
- AB: Abtrieb
- L: Längsmittelachse von 100
- VE: vorgeordnete Ebene
- VN: nachgeordnete Ebene
- E1: erste Ebene
- E2: zweite Ebene
- RM: Radialraum

## Patentansprüche

1. Kupplungseinheit (110) zur Verbindung eines Antriebs (AN) mit einem Abtrieb (AB),
- mit einer antriebsseitigen Anschlussvorrichtung (112), wie Flansch, die eine antriebsseitige Rotationsachse aufweist und mit einer Vielzahl von antriebsseitigen Befestigungsmitteln (113) versehen ist, welche alle in einer gemeinsamen Radialebene (E1) der Rotationsachse und auf einem gemeinsamen Radius um die Rotationsachse der antriebsseitigen Anschlussvorrichtung (112) angeordnet sind,
- mit einer abtriebsseitigen Anschlussvorrichtung (212), wie Flansch, welche eine abtriebsseitige Rotationsachse aufweist und mit einer Vielzahl von abtriebsseitigen Befestigungsmitteln (213) versehen ist, welche alle in einer gemeinsamen Radialebene (E2) der Rotationsachse und auf einem gemeinsamen Radius um die Rotationsachse der abtriebseitigen Anschlussvorrichtung (212) angeordnet sind
- und mit Verbindungselementen (117, 217), wie Lenker oder Koppelstange, die einerseits an einem antriebsseitigen Befestigungsmittel (113) und andererseits an einem abtriebsseitigen Befestigungsmittel (213) mittels einer sphärischen Gelenkverbindung angeordnet sind,
**dadurch gekennzeichnet,**
- **dass** der Radius, auf welchem die antriebsseitigen Befestigungsmittel (113) um die antriebsseitige Rotationsachse angeordnet sind und der Radius, auf welchem die abtriebsseitigen Befestigungsmittel (213) um die abtriebsseitige Rotationsachse angeordnet sind betragsmäßig identisch sind,
- **dass** das antriebsseitige Befestigungsmittel (113) und das mit diesem mittels eines Verbindungselementes (117, 217) gekoppelte abtriebsseitige Befestigungsmittel (213) hinsichtlich der antriebsseitigen Rotationsachse um 80 Grad bis 100 Grad, insbesondere 85 Grad bis 95 Grad, insbesondere um im Wesentlichen 90 Grad umfangsbeabstandet zueinander angeordnet sind.

2. Kupplungseinheit nach Anspruch 1, **dadurch gekennzeichnet, dass** drei Verbindungselemente (117, 217) vorgesehen sind, die jeweils ein antriebsseitiges Befestigungsmittel (113) und ein abtriebsseitigen Befestigungsmittel (213) miteinander verbinden und in einem gemeinsamen, sich über einen Axialabschnitt der antriebsseitigen Rotationsachse erstreckenden Radialraum zwischen der antriebsseitigen Anschlussvorrichtung (112) und der abtriebsseitigen Anschlussvorrichtung (212) angeordnet sind und ein Verbindungsmittelterzett bilden.

3. Kupplungseinheit nach Anspruch 2, **dadurch gekennzeichnet, dass** die Kupplungseinheit weitere Verbindungsmittelterzette zwischen der antriebsseitigen Anschlussvorrichtung (112) und der abtriebsseitigen Anschlussvorrichtung (212) aufweist, die jeweils drei Verbindungselemente (117, 217) umfassen, und jeweils in einem eigenen Radialraum zwischen der antriebsseitigen Anschlussvorrichtung (112) und der abtriebsseitigen Anschlussvorrichtung (212) angeordnet sind.

4. Kupplungseinheit nach Anspruch 3, **dadurch gekennzeichnet, dass** die durch jeweils ein Verbindungsterzett angebundenen Befestigungsmittel (113, 213) Befestigungsmittelgruppen bilden, die auf demselben Radius, jedoch umfangsversetzt zueinander angeordnet sind.

5. Kupplungseinheit nach Anspruch 3, **dadurch gekennzeichnet, dass** die durch jeweils ein Verbindungsterzett angebundenen Befestigungsmittel (113, 213) Befestigungsmittelgruppen bilden, die auf unterschiedlichen Radien angeordnet sind.

6. Kupplungseinheit nach Anspruch 1, **dadurch gekennzeichnet, dass** die Kopplung zwischen den Befestigungsmitteln (113, 213) und den Verbindungselementen (117, 217) mittels einer Kugelgelenkverbindung erfolgt.

7. Kupplungseinheit nach Anspruch 1, **dadurch gekennzeichnet, dass** die sphärische Gelenkverbindung unter Nutzung von Stahl, Kunststoff, Elastomeren und/oder Gewebewerkstoffen gebildet ist.

8. Kupplungseinheit nach einem der vorhergehenden Ansprüche, **dadurch gekennzeichnet, dass** die Verbindungselemente (117, 217) gegen ein Verdrehen im Betrieb der Kupplungseinheit insbesondere um ihre Längsachse gesichert sind.

9. Wellenkupplung mit zwei miteinander verbundenen Kupplungseinheiten gemäß einem der Ansprüche 1 bis 8, **dadurch gekennzeichnet, dass** die Kupplung zwar einen den Axialversatz von Antrieb (AN) und Abtrieb (AB) ausgleichenden Freigang aufweist, jedoch gegen axiale Spielbewegung im Kupplungsbetrieb gesichert ist.

## Claims

1. Coupling unit (110) for connecting a drive (AN) to an output (AB),
- having a connecting device (112) on the drive side, such as a flange, which has an axis of rotation on the drive side and is provided with a plurality of fastening means (113) on the drive side which are all arranged in a common radial plane (E1) of the axis of rotation and on a common radius around the axis of rotation of the connecting device (112) on the drive side;
- having a connecting device (212) on the output side, such as a flange, which has an axis of rotation on the output side and is provided with a plurality of fastening means (213) on the output side which are all arranged in a common radial plane (E2) of the axis of rotation and on a common radius around the axis of rotation of the connecting device (212) on the output side;
- and having connecting elements (117, 217), such as links or coupling rods, which are arranged, on the one hand, on a fastening means (113) on the drive side and, on the other hand, on a fastening means (213) on the output side by means of a spherical joint connection,
**characterised in that**
- the radius on which the fastening means (113) on the drive side are arranged around the axis of rotation on the drive side, and the radius on which the fastening means (213) on the output side are arranged around the axis of rotation on the output side are identical in amount;
- that the fastening means (113) on the drive side, and the fastening means (213) on the output side which is coupled to said fastening means by means of a connecting element (117, 217), are arranged so as to be peripherally spaced apart from one another, with respect to the axis of rotation on the drive side, by 80 degrees to 100 degrees, in particular 85 degrees to 95 degrees, in particular by substantially 90 degrees.

2. Coupling unit according to Claim 1, **characterised in that** three connecting elements (117, 217) are provided, which each connect a fastening means (113) on the drive side and a fastening means (213) on the output side to one another and are arranged in a common radial space, which extends over an axial section of the axis of rotation on the drive side, between the connecting device (112) on the drive side and the connecting device (212) on the output side, and form a trio of connecting means.

3. Coupling unit according to Claim 2, **characterised in that** the coupling unit has other trios of connecting means between the connecting device (112) on the drive side and the connecting device (212) on the output side, which trios each comprise three connecting elements (117, 217) and are each arranged in a radial space of their own between the connecting device (112) on the drive side and the connecting device (212) on the output side.

4. Coupling unit according to Claim 3, **characterised in that** the fastening means (113, 213) which are attached by a connecting trio in each case form groups of fastening means which are arranged on the same radius but in a peripherally offset manner in relation to one another.

5. Coupling unit according to Claim 3, **characterised in that** the fastening means (113, 213) which are attached by a connecting trio in each case form groups of fastening means which are arranged on different radii.

6. Coupling unit according to Claim 1, **characterised in that** coupling between the fastening means (113, 213) and the connecting elements (117, 217) takes place by means of a ball joint connection.

7. Coupling unit according to Claim 1, **characterised in that** the spherical joint connection is formed using steel, plastic, elastomers and/or textile materials.

8. Coupling unit according to one of the preceding claims, **characterised in that** the connecting elements (117, 217) are secured against twisting when the coupling unit is in operation, particularly about their longitudinal axis.

9. Shaft coupling having two coupling units according to one of Claims 1 to 8 which are connected to one another, **characterised in that**, although the coupling has free travel which compensates for the axial offset of the drive (AN) and output (AB), it is nevertheless secured against axial free motion when the coupling is in operation.

## Revendications

1. Unité d'embrayage (110) pour la liaison d'un entraînement d'entrée (AN) avec un entraînement de sortie (AB)
- avec un dispositif de liaison côté entraînement d'entrée (112), comme une bride, qui présente un axe de rotation côté entraînement d'entrée, et qui est pourvu d'une pluralité de moyens de fixation côté entraînement d'entrée (113), lesquels sont tous disposés dans un plan radial (E1) commun de l'axe de rotation et sur un rayon commun autour de l'axe de rotation du dispositif de liaison côté entraînement d'entrée (112),
- avec un dispositif de liaison côté entraînement de sortie (212), comme une bride, qui présente un axe de rotation côté entraînement de sortie, et qui est pourvu d'une pluralité de moyens de fixation côté entraînement de sortie (213), lesquels sont tous disposés dans un plan radial (E2) commun de l'axe de rotation et sur un rayon commun autour de l'axe de rotation du dispositif de liaison côté entraînement de sortie (212),
- et avec des éléments de liaison (117, 217), comme une bielle ou barre d'accouplement, qui sont disposés d'une part, au niveau d'un moyen de fixation côté entraînement d'entrée (113), et d'autre part, au niveau d'un moyen de fixation côté entraînement de sortie (213), au moyen d'une liaison rotule sphérique,
**caractérisée en ce que**
- le rayon, sur lequel les moyens de fixation côté entraînement d'entrée (113) sont disposés autour de l'axe de rotation côté entraînement d'entrée, et le rayon, sur lequel les moyens de fixation côté entraînement de sortie (213) sont disposés autour de l'axe de rotation côté entraînement de sortie, sont identiques en quantité,
- le moyen de fixation côté entraînement d'entrée (113) et le moyen de fixation côté entraînement de sortie (213) couplé à celui-ci au moyen d'un élément de liaison (117, 217), sont disposés, espacés circonférentiellement l'un de l'autre, en ce qui concerne l'axe de rotation côté entraînement d'entrée, de 80 degrés à 100 degrés, en particulier de 85 degrés à 95 degrés, et en particulier de 90 degrés essentiellement.

2. Unité d'embrayage selon la revendication 1, **caractérisée en ce qu'**il est prévu trois éléments de liaison (117, 217), qui relient respectivement, ensemble, un moyen de fixation côté entraînement d'entrée (113) et un moyen de fixation côté entraînement de sortie (213) qui sont disposés dans un espace radial commun s'étendant sur une section axiale de l'axe de rotation côté entraînement d'entrée, entre le dispositif de liaison côté entraînement d'entrée (112) et le dispositif de liaison côté entraînement de sortie (212) et qui forment un trio de moyens de liaison.

3. Unité d'embrayage selon la revendication 2, **caractérisée en ce que** l'unité d'embrayage présente d'autres trios de moyens de liaison entre le dispositif de liaison côté entraînement d'entrée (112) et le dispositif de liaison coté entraînement de sortie (212) qui comprennent respectivement trois éléments de liaison (117, 217), et sont respectivement disposés dans un espace radial propre entre le dispositif de liaison côté entraînement d'entrée (112) et le dispositif de liaison côté entraînement de sortie (212).

4. Unité d'embrayage selon la revendication 3, **caractérisée en ce que** les moyens de fixation (113, 213), reliés chacun par un trio de liaison, forment des groupes de moyens de fixation, qui sont disposés sur le même rayon, cependant, décalés circonférenciellement les uns des autres.

5. Unité d'embrayage selon la revendication 3, **caractérisée en ce que** les moyens de fixation (113, 213), reliés chacun par un trio de liaison, forment des groupes de moyens de fixation, qui sont disposés sur des rayons différents.

6. Unité d'embrayage selon la revendication 1, **caractérisée en ce que** l'accouplement entre les moyens de fixation (113, 213) et les éléments de liaison (117, 217) est réalisé au moyen d'une liaison par articulation à rotule.

7. Unité d'embrayage selon la revendication 1, **caractérisée en ce que** la liaison rotule sphérique est formée en utilisant de l'acier, de la matière plastique, des élastomères et/ou matériaux tissés.

8. Unité d'embrayage selon l'une des précédentes revendications, **caractérisée en ce que**, l'unité d'embrayage en fonctionnement, les éléments de liaison (117, 217) sont sécurisés contre toute rotation, en particulier autour de leur axe longitudinal.

9. Accouplement d'arbre avec deux unités d'embrayage reliées ensemble selon l'une des revendications 1 à 8, **caractérisé en ce que** l'accouplement présente certes un espace libre compensant le décalage axial de l'entraînement d'entrée (AN) et l'entraînement de sortie (AB), mais est sécurisé contre le mouvement de jeu axial de l'accouplement en fonctionnement.
